# EUROPEAN PATENT APPLICATION

(11) **EP 4 435 699 A1**
(43) Date of publication of application: **25.09.2024**
(21) Application number: 23020143.6
(22) Date of filing: 21.03.2023
(51) Int. Cl.: G06Q 20/06, G06Q 20/36

(54) **SECURE TRANSACTION UNIT, TOKEN REFERENCE REGISTER, ELECTRONIC PAYMENT TRANSACTION SYSTEM AND METHOD FOR REGISTERING OF TOKEN**

(71) Applicant: Giesecke+Devrient advance52 GmbH, 81677 München (DE)
(72) Inventor: Hupel, Lars, 80809 München (DE)
(74) Representative: Giesecke+Devrient IP

(57) **Abstract**

The invention relates to a secure transaction unit. The invention also relates to a token reference register. The secure transaction unit (TU) comprising:
- means for receiving and transmitting one or more tokens (T), wherein each token (T) comprises at least a monetary value (v), a private key (r) of a token-individual key pair, and a token-type information as token elements; and
- control means configured to cause a direct exchange of one or more tokens (T) with one or more other secure transaction units (TU) in the electronic transaction system (TS), and to send one or more registration requests (RR) including token references (TR) to a token reference register (T-Reg) of the electronic transaction system (TS) for registering the tokens (T) in the electronic payment transaction system (TS),
- wherein each token reference (TR) comprises the monetary value (v) of the assigned token (T), a public key (R) corresponding to the private key (r) of the token-individual key pair, and the token-type information of the assigned token (T) as token reference elements and wherein each token reference (TR) being uniquely assigned to a token (T).

## Description

The invention relates to a secure transaction unit. The invention also relates to a token reference register. The invention also relates to an electronic transaction system in particular an electronic payment transaction system. The invention also relates to a method for registering tokens in a token reference register.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

There are different technical approaches for a digital asset e.g. digital currency such as CBDC, issued by a central bank.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 tokens are stored in a local token management unit (also called wallet or payment application unit or secure element) to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token reference register stores token references of all valid tokens without knowing the tokens itself. So, the user can check validity of a received token. The token reference register only stores token references of the corresponding token. Tokens can be further modified by each participant of the payment transaction system, e.g., ownership of tokens can be switched from one participant to another participant (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

The electronic payment transaction system according to the third approach may comprise more than one token issuer instances. For instance, a first financial service provider unit, such as a commercial bank A, may issue token-A and a second financial service provider unit, such as a commercial bank B, may issue token-B. Token-A always represents a liability with respect to the first financial service provider unit, even if - for whatever reason - this token A is managed by the second financial service provider unit. Token-B always represents a liability with respect to the second financial service provider unit, even if - for whatever reason - this token B is managed by the first financial service provider unit.

There is a need for inter-operability between token-A and token-B. More precisely, it should be possible that a first participant having token-A and a second participant having token-B can perform a payment transaction. It should be possible that the first service provider unit issuing token-A can clear token-B and that the second service provider unit issung token-B can clear token-A. However, safety and confidentiality must be assured at any times to avoid attacks, such as double-spending of tokens and/or spending tokens with fraud-generated (not in real existing) monetary values.

The above-identified objectives are solved with the features of the independent patent claims. Further advantageous embodiments are described in the dependent patent claims.

In an aspect of the present invention there is provided a secure transaction unit, preferably a secure transaction unit of a financial service provider unit, for managing payment transactions in an electronic payment transaction system.

The secure transaction unit comprises means for receiving and transmitting one or more tokens, wherein each token comprises at least a monetary value, a private key of a token-individual key pair, and a token-type information as token elements.

The secure transaction unit further comprises control means configured to cause a direct exchange of one or more tokens with one or more other secure transaction units in the electronic transaction system, and to one or more send registration requests including token references to a token register of the electronic transaction system for registering the tokens in the electronic payment transaction system. The registration requests are also referred to as replacement requests and are used to register modifications of the token in the token reference register.

Each token reference comprises the monetary value of the assigned token, a public key corresponding to the private key of the token-individual key pair, and the token-type information of the assigned token as token reference elements. Each token reference is uniquely assigned to a token.

With this concept, each token has a token element being a token-type-information. With this token-type information, an origin of the token and/or an issuer of the token can be identified. So, the token-type information may be also referred to as token-origin information or as token-issuer information.

The token-type information may be an information for uniquely identifying a specific financial service provider unit of a plurality of financial service provider units in the electronic payment transaction system, wherein the financial service provider unit issued the token. So, with this token-type information it is possible to differentiate between tokens from different token-issuer units, e.g., different financial service provider units. The token-type information is not a currency data, because the currency used for different token-types may be identical and so, the currency data may not provide sufficient information to distinguish between the different token-types.

The token-type information may be an international security identification number code, short ISIN code. An ISIN uniquely identifies a security, such as an equity (shares, units, depository receipts), a debt instruments, entitlements (rights, warrants), derivatives (options, futures) or other securities (commodities, currencies, indices, interest rates). Its structure may be defined in ISO-6166. The ISIN code is a 12-character alphanumeric code that serves for uniform identification of the security through normalization of an assigned national number.

The token-type information may be a German securities identification code, such as a so-called Wertpapierkennnummer, short WKN.

The token-type information may be a bank code number. A bank code is a code assigned by a central bank, a bank supervisory body or a Bankers Association in a country to all its licensed member banks or financial institutions.

The token-type information may be a Bank Identifier Code, BIC to uniquely identify a financial service provider unit that issued the token. These codes are used when transferring money between banks, particularly for international wire transfers, and for the exchange of other messages between banks. The codes can sometimes be found on account statements.

The control means of the secure transaction unit is further configured to generate one or more token references, especially upon modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

The control means of the secure transaction unit is further configured to perform a swap-command. The swap-command is for registering a first token having a first token-type information and a second token having a second token-type information within one single registration request. After performing the swap-command, the token may be used for another service provider unit that uses token of the other token-type. The single registration request may include a combination of two switch-commands that need to be performed together to fulfil the swap-command.

A requirement for the swap-command is that there is a first token of a first financial service provider unit and second token of a second financial service provider unit. The difference of the tokens is expressed by the token-type information.

For performing the swapping command, the control means is configured to perform a first switch-command on the first token having the first token-type information to obtain a third token having the monetary value of the first token and the first token-type information; and to perform a second switch-command on the second token having the second token-type information to obtain a fourth token having the monetary value of the second token and the second token-type information. The first switch-command and the second switch-command may be combined into one single registration request. As a result, first and second tokens with different token-type information can be swapped by generating the third token and the fourth token.

In an embodiment, the swap-command for performing the first and second switch-command is realized as an atomic-operation, thus, only in case both switch-commands are successfully performed, the swap-command is valid, otherwise the swap-command is not valid, and the both switching-command(s) are not registered.

Preferably, the monetary value of the first token equals the monetary value of the second token. So, no money is destroyed or generated by the swap-command.

Preferably, a payment transaction may be performed with a token of any type if the monetary value of the token is sufficient to perform the payment.

Preferably, a payment transaction may be performed with a plurality of token of different types and the sum of the monetary value of all tokens used in the payment transaction is equal to the requested payment.

The swap-command may be executed to obtain tokens of a prioritized token-type information used for a future payment transaction.

In an embodiment it may be possible that the secure transaction unit negotiates the token-type that should be used for the subsequent payment. Based on the negotiation result between two secure transaction units, the tokens of a prioritized token-type are exchanged. If needed, tokens of one token-type may be swapped with tokens of another token-type prior performing the token exchange to ensure that tokens with the correct or desired or most-preferred token-type information is used for the token exchange.

For such a negotiation, the secure transaction unit may comprise preferences that may be predefined by the user or the service provider unit. So, it may be initially set-up in the secure transaction unit that tokens with a specific token-type information should be used with a higher priority than token with another token-type information. For instance, it may be predefined that sending of tokens should be performed with a first token-type information but receiving of tokens should or can be performed with tokens of a second token-type information, that is different from the first token-type information.

A negotiation as indicated above may be a part in each payment transaction, e.g., upon request to exchange token between two participants in the payment system. The negotiation may be initiated prior the exchange of the token. In case, the two participants in the payment system know each other, such a negotiation may not be repeated after a successful token transaction for a subsequent token transaction, for instance if the subsequent token transaction is initiated within a predefined timeframe, e.g. within one day or one week or one month.

Such a negotiation may comprise a first negotiation step in which a token-type information setup information is exchanged between the secure transaction units of the individual participants of the transaction. After this first negotiation step, each participant knows the preferred token-type information setup of the other participant(s).

In a second step of the negotiation, the token-sending secure transaction unit is configured to collect the information of tokens available in the token storage.

In a third step of the negotiation, the token-sending secure transaction unit provides a suggestion about the intended (preferred) tokens to be send. In this third step, the token-sending transaction unit may already consider the token-type information from the token-receiving secure transaction unit.

In a fourth step of the negotiation, the token-receiving secure transaction unit may transfer an accept-information to the token-sending secure transaction unit to indicate that the suggestion is accepted. Alternatively, the token-receiving secure transaction unit is configured to collect information of tokens available in the token storage to provide a counter-suggestion, for instance if a more preferred token exchange with tokens having different token-type information is more appropriate when considering the information about the token-type information from the token-sending transaction unit.

At the end of the negotiation both participants indicated their agreement to a token exchange with tokens of a special token-type. The token to be exchanged may preferably all be of one token-type to reduce efforts on the token-receiving transaction unit.

The negotiation may be dependent on conditions defined by individual service provider units, such as an expiry date of a token, a number of tokens to be transferred within a certain timeframe in order to receive special conditions with the financial service provider unit, a monetary value to be transferred within a certain timeframe in order to receive special discounts with the financial service provider unit, or the like.

In an embodiment, the secure transaction unit is a secure element that is operatively connected to an electronic equipment of a participant in the electronic payment system.

In an embodiment, the secure transaction unit is a secure wallet that is hosted at a service provider unit.

The control means may be configured to access a token storage, preferably a token storage of the secure transaction unit.

The secure transaction unit may comprise a token storage as a physical entity. The secure transaction unit may be configured to access the token storage. The token storage may be a token vault of this secure transaction unit. Each secure transaction unit in the transaction system may comprise its own token storage.

From such token storage accessible by the secure transaction unit, each token can be transferred to any other secure transaction unit, e.g., owned by a customer of the secure transaction unit.

The secure transaction unit may be a secure wallet that may be a hardware security module built in hardware or software to enable tamperproof and secure access to the tokens.

In another aspect of the invention, a token reference register for registering of token of an electronic payment transaction system is provided.

The token reference register comprises one or more storage units for storing token references for registering tokens in the electronic payment transaction system. Each token comprises at least a monetary value, a private key of a token-individual key pair, and a token-type information as token elements.

The token reference register further comprises one or more verification units for verifying whether the token reference of a receive registration request is stored in the token reference register.

Each stored token reference in the token reference register comprises the monetary value of the token, a public key corresponding to the private key of the token-individual key pair, and the token-type information of the assigned token as token reference element. Each token reference being uniquely assigned to a token.

The storage unit is further configured to store token references of modified tokens based on a modification command (as part of a registration request), preferably a switch-command, a merge-command, and/or a split-command, wherein a token reference of the modification command is stored only in a case all tokens involved in the modification command comprise the same token-type information.

The token reference register is a unit of the electronic payment transaction system that stores token references, whereby the associated tokens are registered. This token reference register can be a central database or storage unit of the electronic payment transaction system. This token reference register may be a decentralized ledger, for example in a blockchain topology. The token reference register may maintain a history of token references and/or registration requests.

The verifying unit is configured to reject a registration request which comprises token references with different token-type information.

The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference comprises the monetary value of the uniquely assigned token. This monetary value can be used to further validate the registration request at the token reference register.

In the verifying unit it may additionally be determined whether the token reference of the received registration request can be assigned to a token of the electronic payment transaction system. For this purpose, the token reference or a derivative of the token reference or a history for the token reference must be stored in the token reference register, which can be assigned to the token reference of the received registration request.

It may additionally or alternatively be determined by the verifying unit of the token reference register whether the received registration request is syntactically correct, e.g. by validating a digital signature of the registration request. This is used, for example, to check whether the registration request is plausible, whether a command type was correctly specified in the registration request, whether the token uniquely assigned to the token reference exists (can exist); and/or whether a difference of monetary values of tokens in the registration request matches a command type specified in the registration request.

In one embodiment, the verifying unit is configured to determine whether a signature of the registration request is correct.

In a further aspect there is provided an electronic payment transaction system that comprises: a secure token issuing unit that comprises a minting unit configured to generate a new token to be issued in the electronic transaction system; and a melting unit configured to delete tokens to be deleted from the electronic transaction system; a plurality of secure transaction units as described above; and one or more token register for registering the tokens of the electronic transaction system as described above.

In a further aspect there is provided a method for registering of token in an token reference register as described above.

The use of a token reference is not comparable to the use of addresses of subscriber entities in a blockchain-based transaction system, as no addresses of subscriber entities are used in the token reference register according to the invention to prevent traceability of the tokens.

In one embodiment, the received registration request is signed with the private key of the token-individual key pair to be able to check or verify a unique assignment of the token reference to the token. If the verification in the verifying unit is successful, i.e., the signature can be verified, then the sender of the registration request must be in possession of or must be aware of the token. This makes it possible to detect a fraud attempt with non-existent tokens or unauthorized generated tokens.

The use of multiple verification units enables parallel processing of registration requests and speeds up registration in the transaction system. The verification unit(s) compares, for example, a command type of the received registration request with the token values of the received registration request. If a command type is expected not to add token values to or subtract token values from the transaction system, it verifies that this is met with the token values of the received token references. If verification fails, fraud is detected, and a (wrong) registration is prevented.

In an embodiment, the token reference register may comprise a new-registration unit for registering of one or more new tokens that are created by a token issuer or for registering of one or more old tokens that are deleted by the token issuer. In this new-registration unit of the token reference register, newly generated tokens and deleted tokens can be entered. With the new-registration unit, a reference value concerning the total monetary value of all valid (active) tokens located in the transaction system can be updated based on the generated and/or deleted tokens in the token reference register (for example, in a checking unit thereof). For example, if a new token is generated, its monetary value is added to the total monetary value of all valid (active) tokens. If, for example, a token is deleted, its monetary value is subtracted from the total monetary value of all valid (active) tokens.

In one embodiment, the token reference register comprises an evaluating unit for checking a sum of all monetary values concerning the received registration request. This evaluating unit compares the received registration request with a data stock of the storage unit(s) and checks in particular a total monetary value of all valid (active) tokens for change due to the registration request. In this way, the validity of the monetary value can be checked to determine whether a new token value has been generated in an unauthorized manner. This could also be used to check old registration requests and their success, this registration request history could be used to process without loading the memory unit of the token reference register, registration requests sent twice.

In one embodiment, the registration request concerns a split of a token and preferably the registration request has a token reference of the token to be split and a token reference of each of the (at least two) split tokens. The token references contained in the registration request can be concatenated. Splitting is a modification of a token, with which a monetary value of a token can be split into at least two (smaller) monetary values. This makes it possible to reduce the monetary value and to react to a transaction request more accurately to the monetary value. Thus, the origin token that is split becomes invalid and the (at least two) split tokens are registered in the token reference register to become verifiable in the transaction system.

Alternatively or additionally, splitting provides for: Generating a new private key of a token individual key pair for a first split token; applying a hash function on the private key to obtain a hash value for the first split token; generating a new private key of a token individual key pair for a second split token; applying the hash function to obtain a hash value for the second split token; splitting the monetary value into a first monetary partial value and into a second monetary partial value, taking into account that the sum of the first monetary partial value and the second monetary partial value corresponds to the monetary value of the token to be split; generating a token reference for the first split token comprising the first monetary partial value and the hash value of the first split token; generating a token reference for the second split token comprising the second monetary partial value and the hash value of the second split token; and generating the registration request using the token reference of the token to be split, the token reference for the first split token, and the token reference for the second split token.

In one embodiment, the registration request relates to a switch of a token and preferably the registration request has a token reference of the token to be switched. The switching of the token is a further modification possibility. The token references contained in the registration request may be concatenated. If a token is transferred directly from one transaction unit to another transaction unit, for example if the monetary value is to be transferred as a monetary value as part of a payment transaction, the receiving transaction unit can now have the token value re-registered to itself. This registers the switch in the token reference register.

When transferring a token between two transaction units, these two transaction units have knowledge of the same token at the same time. To prevent the sending transaction unit from also using the token with another (third) transaction unit (so-called multiple spending of tokens), a switch of the transmitted token from the first transaction unit to the second transaction unit is preferably executed. The switch can preferably be performed automatically when a token is received in the second transaction unit.

Alternatively, or additionally, the switching provides for: Generating a new private key of a token individual key pair; applying a hash function on the private key to obtain a hash value as a token reference; generating the registration request using the token reference for the token to be switched and the token reference for the switched token.

The monetary value of the token to be switched corresponds to the monetary value of the switched token. Thus, when switching, a token with the same monetary value but new private key is registered with the token reference register.

In one embodiment, the registration request concerns a merging of at least two tokens, and preferably the registration request has a token reference of the merged token and a token reference of each of the tokens to be merged. The token references contained in the registration request can be merged by concatenation. The merge is a modification possibility at a token, with which two token values are merged. This makes it possible to merge two monetary values into one monetary value in order to react to a transaction request with monetary value accuracy. Thus, both tokens to be merged become invalid and the merged token is registered in the token reference register to become checkable in the transaction system.

Alternatively or additionally, when merging, it is provided for: Generating a new private key of a token-individual key pair; applying a hash function to obtain hash value as token reference of the merged token; calculating the monetary value for the merged token by forming the sum of the respective monetary values of the at least two tokens to be merged; generating a token reference for the merged token comprising the calculated monetary value and the hash value for the merged token; and generating the registration request using each token reference of the tokens to be merged and the token reference for the merged token.

In one embodiment, a registration request is sent by a secure issuing unit, wherein the registration request concerns a creating of a token or a deletion of a token.

Each combination as named herein may be referred to as a concatenation, which is a logical combination used in information technology.

In a further aspect, a non-transitory computer readable storage medium for tangibly storing computer program instructions capable of being executed by a processor is described. The computer program instructions defining the steps the method as described above.

Each token comprises a monetary value as a first token element. The monetary value may be a data that represents money usable in one or more electronic payment transaction.

Each token further comprises a private key as a second token element. The private key may be referred to as a blinding value (e.g. obfuscation amount) or may be a random number or may be a secret that is not known to participants not involved in a transaction. The private key may be a private key of a token-individual key pair.

In addition, each token may have further token elements as outlined below and may also have further token elements such as further metadata, e.g., currency data that indicates the currency which the monetary amount represents and/or validity data and/or timestamp data. Token of different token-type may have the same currency data, thus they may belong to the same currency.

The token may also be referred to as value note within this disclosure. The token can be used in online and offline payment transactions. The token may represent central bank digital currency, CBDC.

The token may comprise one or more token-individual history entries as a further token element. One history entry may represent one modification, such as SWITCH, SPLIT, MERGE, performed with this token. Such a further token element may also be referred to as history data.

It is possible to use tokens exclusively in offline electronic payment transactions between two directly communicating secure token managing units (e.g., secure elements) within the electronic payment transaction system.

An online electronic payment transaction payment is defined herein as a transaction in which a secure wallet (e.g. in a secure element) that participates in the transaction, e.g. the secure wallet that initiates the token transfer (payer) or the secure wallet that receives a token (payee), has access and can communicate with one or more remote instances of the electronic payment system, such as a token register, a transaction register, a token issuing unit, a service provider unit such as financial service provider (FSP) via classical internet or mobile communication means or any other suitable online communication protocol. So, immediately before, while or after performing the transaction, also a registration of the transaction by storing a respective token reference in a remote token register is performed by one of the secure wallets involved in the transaction.

An offline electronic payment transaction payment is defined herein as a direct transaction between two secure wallets (e.g. residing in secure elements) that participate in the transaction, e.g. the secure wallet that initiates the token transfer (payer) and/or the secure wallet that receives a token (payee). At least one of payer or payee has no access and cannot communicate with remote instances of the transaction system, such as a token register, a transaction register, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

For a registration of a token in the token register, a token reference of the token may be generated. Each token reference comprises a hash value as a token reference element and may further have the monetary value of the token as another token reference element.

A token "managed by" a token transaction unit, such as the above described secure wallets, is a token that resides in a memory (storage) space. The memory space can be an internal memory space of the token management unit, or it can be an external memory space to which the token management unit has exclusive access rights. This memory space can include a remote memory space, such as a cloud memory (storage) space.

Implementation of modifications to tokens can be performed with the known payment transactions of WO 2020/212 337 A1; WO 2020/212 331 A1; WO 2021 /170 646 A1 and WO 2021 / 170 645 A1 protocols.

A corresponding token reference is (uniquely) associated with each token in the method and payment transaction system. Knowledge of a token reference does not authorize issuing of the digital money represented by the token. This represents a key difference between token references and tokens. A token reference is unique and also uniquely associated with one token, so there is a 1-to-1 relationship between the token and the token reference. The token reference can be computed by each participant, such as a secure wallet (e.g. in a secure element) of a participant in the electronic payment system. The computing is preferably performed by the control means.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure electronic payment transaction system for token transactions according to the invention.
Fig. 2 shows another exemplary embodiment of a secure electronic payment transaction system for token transactions according to the invention.
Fig. 3a shows an overview of commands for tokens according to the invention.
Fig. 3b shows an overview of signed registration requests for the commands according to the invention.
Fig. 4 shows an exemplary embodiment of a flowchart of a method according to the invention for swapping tokens.
Fig. 5 shows another exemplary embodiment of a flowchart of a method according to the invention.

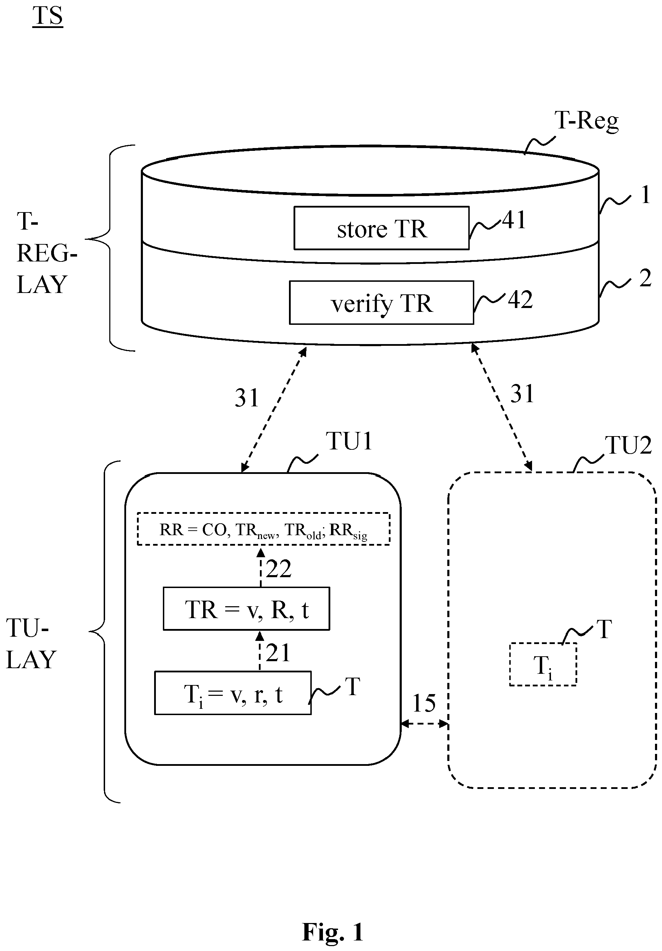

Fig. 1 shows an embodiment example of a secure electronic payment transaction system TS according to the invention. The transaction system TS comprises a register layer T-REG-LAY in which a token reference register T-Reg is arranged. The TS further comprises a direct transaction layer TU-LAY in which a plurality of transaction units TU may be provided, as an example, two transaction units TU1 and TU2 are shown in Fig. 1.

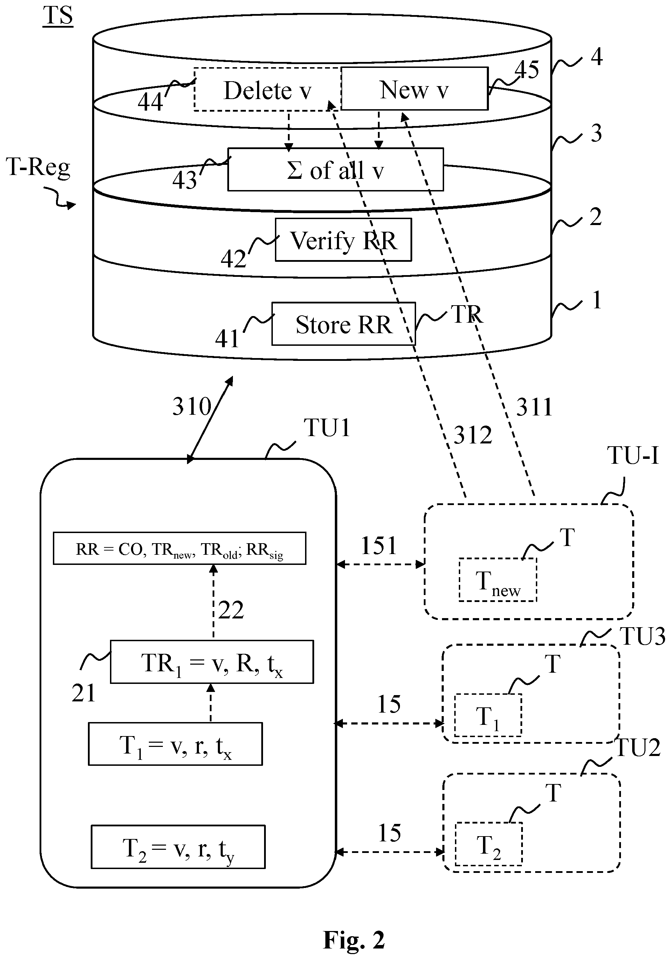

The transaction units TU of the transaction system TS are arranged to exchange 15 tokens T directly with each other. In the case of Fig. 1, the tokens T are payment tokens, which are also referred to as digital coins. Each token T is generated by a transaction unit TU-I of a specific token issuer (not shown in Fig. 1 but see Fig. 2).

The TS of this invention comprises a plurality of token issuer, such as different financial service provider, each of them configured to issue its own type of token.

Each token T can be modified, such as split, merged or switched, by applying modification-commands by each transaction unit TU. Each token T can be generated by a transaction unit TUI of a token issuer and can also be deleted. These modifications are compliant with the above described third approach and it is refrained from repeating these modifications here again. Each modification can be registered in the T-Reg by replacement requests (registration commands). A transaction unit TU-I of a token issuer is, for example, a commercial bank.

A token T is uniquely represented by a monetary value v as well as a random number r as well as a token-type information t. Thus, each token T in this TS has at least three token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

The token-type information as a third mandatory token element is an information for uniquely identifying a financial service provider unit in the TS, wherein the financial service provider unit issued the token T and may be considered as one of the plurality of token issuer of the TS. The token-type information is one or more of an ISIN, a WKN, a BIC or the like.

A transaction unit TU has exclusive access to a storage unit (vault) or includes a token memory in a data store of the transaction units TU.

A token T may be stored as a TLV encoded record in a token store and then has a unique tag and length information, for example, in the following format.

For each token T, a token reference TR can be stored in the token reference register T-Reg. The token reference TR comprises the monetary value v (of the token T), a public key R that corresponds to the private key r of the token-individual key pair, and the token-type information t. The token reference TR of the token T can be viewed at any time in the register T-Reg of the transaction system TS.

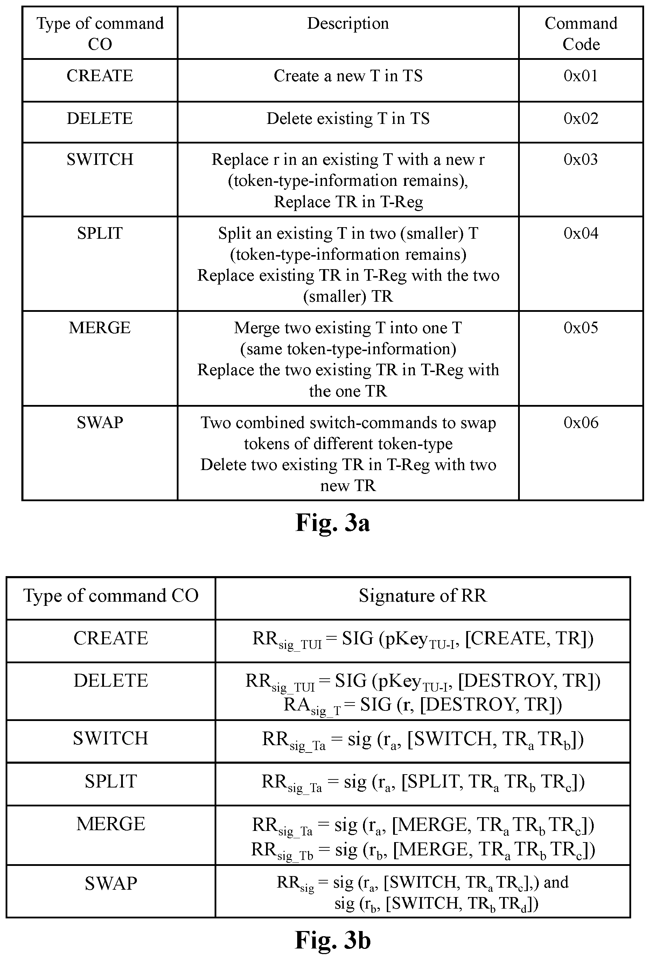

This token reference TR can be sent 31 to the token reference register T-Reg in form of a registration request RR (being generated in step 22), if necessary, together with a command (see overview in Figs. 3a and 3b) regarding the token T.

Additionally, the registration request RR can be signed with the private key r. Signing makes it possible to verify that the sender of the token reference TR was in possession of the token T, further enhancing security in the transaction system TS.

The registration request RR related to switch, split and merge modification may include the modification command CO, a new token reference TR_{new} of a token T to be registered and an old token reference TR_{old} of a token T to be removed from the token reference register T-Reg. The registration request RR may also comprise a signed registration request RR_{sig}, which is the RR signed with the private part r of the new token T.

In the transaction unit TU, the signed registration request RR_sig is stored as a so-called PROOF.

This registration request RR can be sent 31 to the token reference register T-Reg. This registration request RR is received in the token reference register T-Reg. After the registration request RR has been checked by the token reference register T-Reg, the token reference TR is stored in the token reference register T-Reg, whereby the token T is registered in the transaction system TS and an old token reference TR is deleted from the token reference register T-Reg.

This token reference TR is uniquely assigned to the token T and is used to register the token T in the transaction system TS. The token reference TR is therefore the public representation of the token T from the direct transaction layer TU-LAY. Sole knowledge or possession of the token reference TR alone does not allow the token T to be transferred and is not equivalent to the TU being in possession of the token T. The token reference TR is used to prevent multiple spending attempts and checks whether token values v have been generated in an improper manner. Therefore, the token reference TR and, if applicable, the history about the tokens T and the corresponding registration requests RR from TU(s) are stored in the token reference register T-Reg.

The tokens T are stored, for example, in a secure wallet, as the TU. These wallets are, for example, software applications within a terminal device in which the TU is operationally embedded. A wallet may be set up as an application on a smartphone, smart card or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

A transaction with a TU does not require a communication link to the token reference register T-Reg of the transaction system TS. The transaction system TS is set up to perform a transaction offline, i.e., without a communication link to the token reference register T-Reg. A corresponding registration of token T may therefore be temporally downstream of a transfer of token T to a TU.

The token reference register T-Reg is a unit of the transaction system TS and is either a central register or database of the transaction system TS or a decentralized register or database (DLT) of the transaction system TS.

The public part R of the token individual key pair is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

Fig. 2 shows another exemplary embodiment of a token reference register T-Reg of the invention.

In particular, the token reference register T-Reg manages the storage location for the token references TR, shown here as database 1 as an example of a storage unit in the token reference register T-Reg. As a representative example, the TR₁ for the token T of the TU1 is entered in the database 1 upon replacement request 310. This database 1 may consist of an association of many databases which are interconnected.

In addition, the token reference register T-Reg may include at least one verification unit (=verifying unit) 2. The verification unit 2 of the token reference register T-Reg verifies registration requests RR. Thereby, a syntactical correctness or also the correct specification of a command in the registration request RR can be verified. Also, a history from old (past) registration requests RR concerning a token T can be verified. The separation of this verification unit 2 from the database 1 distributes the tasks of filing and checking and increases the speed in the token reference register T-Reg.

In addition, the token reference register T-Reg may include an evaluating unit 3 (checking unit) that checks whether a total monetary value ∑ in the transaction system TS is changed with the token value v of a received token reference TR. If this is the case, then a new token value v has been created or an existing token value v has been destroyed.

Only privileged entities, such as an issuer TUI, are allowed to do this in the transaction system TS. If such a change of the total sum of monetary values is detected by a token reference TR of a TU, then a fraud case can be assumed. Thus, illegal generation of token values v can be detected and prevented very easily.

The verification of the total monetary value by the evaluating unit 3 represents another security concept in the transaction system TS.

In addition, the token reference register T-Reg may include a new-registration unit 4 in which newly generated token references TR of a token issuer TUI are first-registered (creation request 311) or token references TR to be deleted are de-registered deletion (request 312). This achieves a separation of functions between token references TR of privileged participants, such as a token issuer TU-I, from token references TR of unprivileged participants, such as the TU. The monetary values v of newly generated token references TR or token references TR to be deleted directly affect a change in the total monetary value monitored in the evaluating unit 3. A token issuer TU-I may be a central bank or a commercial bank. The TS may have a plurality of different token issuer TU-I, each of them issuing a token with a specific token-type information t.

A registration request RR, e.g. 310, 311, 312, is preferably signed with the private part r. The signature allows a syntactic authenticity of the command to be easily checked by the receiver (T-Reg or TU). This verification is preferably performed in the database 1 or the verification unit 2. Furthermore, a register request RR can be syntactically validated, for example, by checking the signature and/or the token reference TR.

Even though a signature may be checked in a TU, this does not ensure that multiple issuances of the same token T have not been attempted. Therefore, registration in the token reference register T-Reg is provided. In addition, a secure hardware platform is maintained by the TU. With available connection to the token reference register T-Reg, the token references TR are transmitted, and the multiple issuance attempt can be detected in the token reference register T-Reg.

If a token reference TR is not yet known in the token reference register T-Reg, it is added.

In Fig. 2, also a direct exchange 15 of tokens is shown. For instance, TU2 directly transfers in step 15 T₂ to TU1. The T₂ is a token T issued by a token issuer Y and so, the token T₂ comprises token-type information t_{y}. For instance, TU3 directly transfers 15 T₁ to TU1.

The T₁ is a token T issued by a token issuer X and so, the token T₁ comprises token-type information tₓ.

It is not allowed in this TS to merge T₁ and T₂ because their token-type information t does not match.

It is also not allowed in this TS to split T₁ into two or more (smaller valued) tokens T with different token-types t.

It is also not allowed in this TS to split T₂ into two or more (smaller valued) tokens T with different token-types t.

It is also not allowed in this TS to (solely!) switch token T₁ (with token-type tₓ) to another token with a token-type different from tₓ.

However, as can be seen in Fig. 2, it is possible that a TU (here TU1) manages and/or stores tokens of different token-types t, here T₁ and T₂.

In Fig. 3a an overview of commands CO is shown, which can be executed at a token T. The commands CO can be modifications of an existing token T, for example "switch", "split" or "merge" that are used in replacement requests 310. The commands CO can also concern the creation (=create) of a token T that is used in a creation request 311 or the deletion (=Destroy) of existing tokens T that is used in a deletion request 312. Furthermore, according to this invention it is now possible to swap tokens with a swap-command. In Fig. 3a command codes are given as examples (0x01 to 0x06), which can then be part of a registration request RR.

The commands "switch", "merge", "split" and "swap" can be integrated into replacement requests (registration requests RR) to register a modification of a token T at the T-Reg.

In contrast to Fig. 3a, these replacement requests RR that include the commands "switch", "merge", "split" and "swap" may have the same command code.

Fig. 3b shows an overview of commands CO and their signed registration request syntax RR_{sig}. Input tokens T and input token references TR are "consumed" per command CO. Thereby output tokens T output token references TR are "generated" per command CO.

A command CO has the basic structure of the following three elements: Command type, input token reference(s), output token reference(s).

Each command has a characteristic number of input token reference(s) ("inputs") and output token reference(s) ("outputs").

It should be noted that for the commands CO "split", "switch" "merge" and "swap", the difference of the token values v of all involved tokens T or token references TR must equal "zero". In other words, these commands CO "Split", "Switch", "Merge" and "Swap" do not generate any token values v and do not destroy any token values v. This can be verified at the command type CO itself or also by the evaluating unit 3 of the token reference register T-Reg and is a check criterion for a registration request RR.

It should also be noted that only for the commands CO "Create" and "Delete" a difference of the token values v of the involved token T or token references TR is allowed, but only in the amount of the token value v of the token T and not beyond.

It should be further noted that for the commands CO "split", "switch" and "merge", it must be checked that tokens T and token references TR thereof always have the same token-type information t. In other words: These commands CO can only be executed if the inputs and outputs comprise token T with the same token-type information t. If these commands CO include tokens with different token-type information t, the corresponding registration request RR fails and the T-Reg does not register the modification.

Each registration request RR can be signed to be able to verify that the sender of the token reference TR is also in possession of the associated token T. An ECDSA scheme can be applied as signature. The registration request RR is preferably signed with the private part r of the token T.

For signed registration requests of the command types CO "Create" and "Delete", a further signature of a transaction unit of a token issuer TU-I is required to ensure that these commands have been generated by a privileged entity of the transaction system TS.

As expressed earlier, the command types CO "Create", "Delete", "Split", "Switch" and "Merge" can be studied in WO 2020 / 212 331 A1 and WO 2020 / 212 331 A1 and it is avoided to repeat the functions or structure thereof.

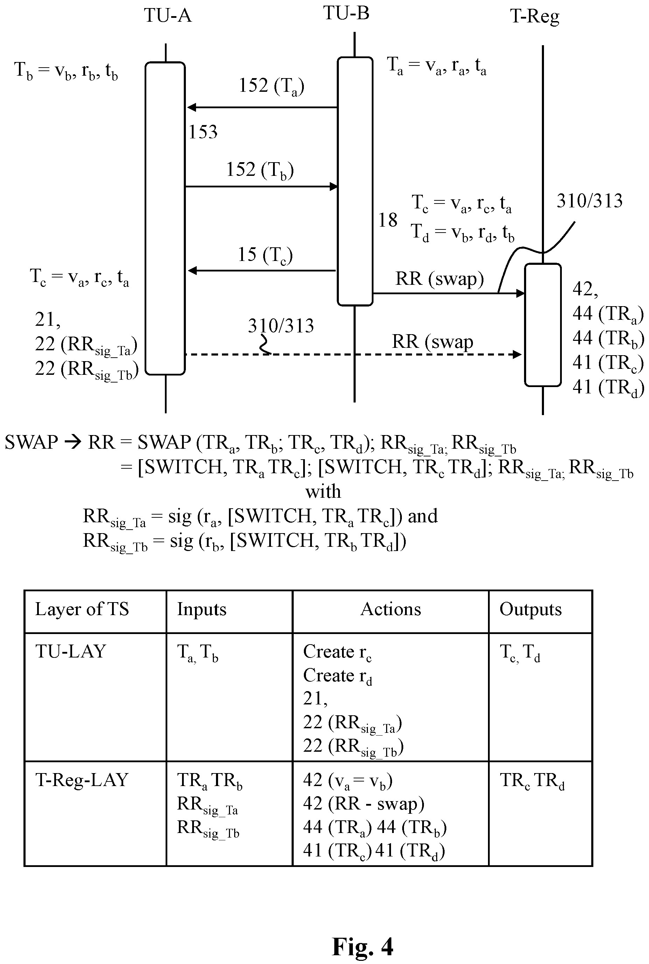

Fig. 4 shows an example of a flowchart of a method according to the invention for swap command.

As can be seen, a first secure transaction unit TU-A has tokens of the token-type B (t_{b}). A second secure transaction unit TU-B has tokens of the token-type A (tₐ). Both secure transaction units TU-A/B are used by participant of the transaction system TS. Both secure transaction units TU-A/B may be token issuer units of respective commercial banks that provide financial services, such as an electronic payment transaction.

Let us assume that that v_{b} is smaller than vₐ.

Since both, token issuer units TU-I-A/B comprise token of the other issuer TU-I-B/A, it is desired to directly clear the token values at the balances of the other unit instead of redeeming the token at the others issuer unit and transfer the money in a conventional method, such as cash withdrawal or booked money transaction.

So, the TU-I-B initiates a settlement 152 of the token Tₐ. However, since v_{b} is smaller than vₐ, TU-I-A has not enough monetary value in return and so, TU-I-A rejects 153 the settlement.

Now, the TU-I-A initiates a settlement 152 of the token T_{b}. However, since v_{b} is smaller than vₐ, TU-I-B has enough monetary value in return. So, the token T_{b} is transferred from TU-I-A to TU-I-B and a swap-command 18 is applied.

The swap-command 18 is a combination of two combined switch-commands. So, in TU-I-B, it is performed a first switch-command on the token Tₐ having the first token-type information tₐ to obtain a third token T_{c} having the monetary value vₐ of the first token Tₐ, a new private key r_{c} and the first token-type information tₐ. Subsequently a second switch-command is performed by TU-I-B on the token T_{b} having the second token-type information t_{b} to obtain a fourth token T_{d} having the monetary value v_{d} of the second token T_{b}, a new private key r_{d} and the second token-type information t_{b}. The token T_{c} is transferred from TU-I-B to TU-I-A.

This sequence, starting with transfer of T_{b} and ending with transfer of T_{c} is advantageously applied as an atomic operation. As soon as one of the intermediate steps is not successfully performed, the entire procedure is denied, and the situation is restored as if the swapping was never initiated with step 152 (T_{b}).

To register the swap, either TU-I-A or TU-I-B provide a replacement request 313 to the T-Reg. The result of this replacement request RR (swap) is that the old token references TRa and TRb are deleted from the T-Reg and that the new token references TRc and TRd are stored in the T-Reg, so that the swap is registered. In conclusion, the tokens Tc and Td are validly registered in the TS.

Both TU-I-A and TU-I-B can now adjust their balance for the swapped tokens T_{c} and T_{d} respectively.

In Fig. 4, the swap of Tₐ and T_{b} to tokens T_{c} and T_{d} as well as the registering 313 the new tokens T_{c} and T_{d} in the token reference register T-Reg is shown. The registration request RR required for this purpose is tabulated, as well as the command structure from the point of view of both the TU-LAY and the T-Reg-LAY.

Two new random numbers r_{c} and r_{d} are generated in TU-I-B. Based on these, public keys R_{c} and R_{d} are computed. The token value vₐ = v_{c} and v_{b} = v_{d} are set to avoid destroying or generating of new money in the TS.

Then the token references TR_{c} and TR_{d} are generated in step 21. A registration request RR 313 then contains the both combined command "SWITCH" or a corresponding command code according to Fig.3a, as well as the input token references TRₐ and TR_{b}. The registration request RR is respectively signed with the random number rₐ of the token Tₐ and/or the random number r_{b} of the token T_{b}. The swap registration request RR and the signed registration request RR_{sig_Ta} and RR_{sig_Tb} are jointly sent as replacement request 310 by TU-I-A or TU-I-B to the token reference register T-Reg.

Upon receipt in the T-Reg, the signatures are checked in step 42. In addition, the token value vₐ is compared with the token value v_{c}. In addition, the token value v_{b} is compared with the token value v_{b}. If vₐ = v_{c} and v_{b} = v_{d} applies and the signature check is successful in step 42, then the token references TRₐ and TR_{b} are deleted in step 44 or marked as deleted in the token reference register T-Reg and the token references TR_{c} and TR_{d} are entered in step 41 in the token reference register T-Reg.

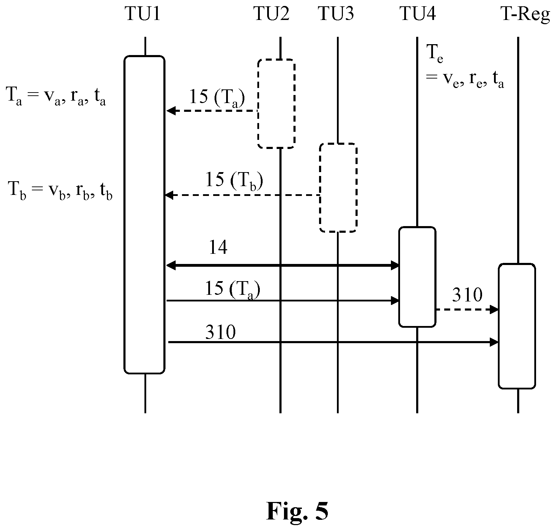

Fig. 5 shows another example of a flowchart of a method according to the invention in which the TU uses more than one token-type t in the TS.

Here it is assumed that TU of participants - not being financial service provider units - are applying the swap command if needed. TU1 receives in step 15 a first token Tₐ that was issued from a first token issuer TU-I-A (not shown in Fig. 5) and so, Tₐ has the token-type information tₐ. TU1 later (or earlier) receives in another step 15 a second token T_{b} that was issued from a second token issuer TU-I-B (not shown in Fig. 5) and so, T_{b} has the token-type information t_{b}. As explained earlier, tokens Tₐ and T_{b} cannot be merged, because they have different token-type-information t. As a result, TU1 has access to Tₐ and T_{b} either being stored in a memory of TU1 or a vault of TU1 or being remotely stored with exclusive access rights provided to TU1. So, TU1 can store or manage tokens T of different token-types t, which makes TU1 most flexible in payment of tokens for TU-I-A as well as TU-I-B.

TU1 now would like to start an electronic payment transaction and wants to directly exchange tokens T with TU4. TU4 may already have a token Tₑ that is of the first token-type tₐ. Since TU1 owns different types of token T, TU1 and TU4 may start a negotiation process 14 in which it is determined, which token-type t is suitable for the payment transaction.

During the negotiation 14 it may be determined TU4 would like to have only tokens Tₐ that are of the first token-type tₐ. This may be a predefined design-rule of the TS or the TU or it may be a desire from the owner of TU4 (since he has better conditions with TU-I-A than with TU-I-B) or it may be a technical system-requirement that TU4 cannot proceed with second token-type t_{b} or a different reason may exist.

So, TU1 obtains - during negotiation 14 - the information that tₐ should be used as token-type. So, the TU1 transfers in step 15 the token Tₐ to fulfil the rules defined in the negotiation 14. In addition, either TU1 or TU4 send a replacement request 310 to the T-Reg for registering the transfer 15 of Tₐ to TU4.

However, it is now also possible to perform a swap-command between TU1 and TU4 for exchanging tokens. This may be achieved by the same procedure as shown in Fig. 4. In this regard, TU1 and TU4 negotiate, how and which token-type to be used. In case, the monetary value is insufficient for a specific token-type, TU1 may perform a swap-command as indicated in Fig. 4.

By using the inventive swap-command, it is now flexibly possible to perform a payment transaction with a token of any token-type if the monetary value of the token is sufficient to perform the payment.

By using the inventive swap-command, it is now flexibly possible to perform payment transaction with a plurality of token of different types and the sum of the monetary value of all tokens used in the payment transaction is equal to the requested payment. In view of Fig. 5, it may be that TU4 requests token that represent a monetary value v_{c}. It is now possible that TU1 performs a payment transaction in which Ta and Tb are send to TU4 and the sum of va + vb is equal to the desired value vc. In case either Ta or Tb must be further adjusted, e.g. a split or merge modification must be performed on one of them, it can be first negotiated in step 14 with TU4 which token Ta or Tb should be further modified.

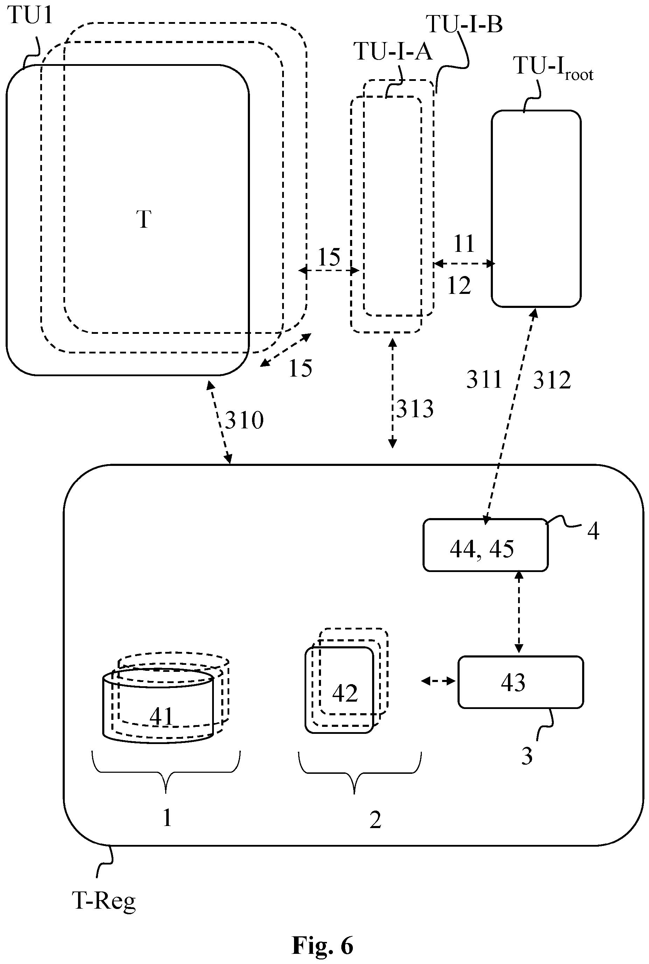

Fig. 6 shows another embodiment of a token reference register T-Reg of a transaction system TS.

In Fig. 6, it is indicated that a plurality of TU-I-A TU-I-B exists that may all receive root tokens from a root token issuer TU-Iᵣₒₒₜ, e.g. a central bank. Tokens may be newly issued 11 or deleted 12. These new tokens issued by TU-Iᵣₒₒₜ may not have a token-type information t.

These new tokens may be issued to intermediate issuers, such as commercial banks TU-I-A and TU-I-B. Here, token-type information tₐ, t_{b} may be added and these tokens may be used in direct token exchange 15.

In Fig. 6 it is shown that a plurality of storage units 1 may be provided in the token reference register T-Reg to accelerate the storing 41 of a plurality of token references TR. Here, it is further indicated that a plurality of verification units 2 may be provided in the token reference register T-Reg to accelerate the verifying 42 of registration requests RR. In addition, a transaction unit of TU-I-B may provide swapping requests 313 (the combined two switching requests of Fig. 4).

### REFERENCE SIGNS

- TS: Electronic (payment) transaction system
- TU: Transaction unit in TS, wallet
- TU-I: Transaction unit of token issuer
- T-Reg: Token Register
1 Storage unit
2 Verifying unit
3 Evaluating v-sum unit
4 New-registration unit
- T-Reg-LAY: Token registration layer
- TU-LAY: Token transfer layer
- RR: Registration request, replacement request
- T: Token
- TR: Token reference
- v: Monetary value of T
- r: Secret, private key of token-individual key pair
- t: token-type information, ISIN, WKN, BLZ
- tx: first type
- ty: second type
- R: public key of token-individual key pair
- CO: Command
- sig: Signature
- 11: new token issued
- 12: old tokens deleted
- 14: negotiate token-type
- 15: transfer of token
151 Transfer of new token
152 Initiate settlement
153 reject settlement
- 16: Transfer of token reference
- 18: Swap
- 21: Derive token reference
- 22: Generate RR
- 31: registration request
310 replacement request
311 creation request
312 destruction request
313 swapping request
- 41: Store TR
- 42: Verify TR
- 43: Evaluate sum of v
- 44: Delete TR
- 45: Register new TR

## Claims

1. A secure transaction unit (TU) for managing payment transactions in an electronic payment transaction system (TS), the secure transaction unit (TU) comprising:
- means for receiving and transmitting one or more tokens (T), wherein each token (T) comprises at least a monetary value (v), a private key (r) of a token-individual key pair, and a token-type information as token elements; and
- control means configured to cause a direct exchange of one or more tokens (T) with one or more other secure transaction units (TU) in the electronic transaction system (TS), and to send one or more registration requests (RR) including token references (TR) to a token reference register (T-Reg) of the electronic transaction system (TS) for registering the tokens (T) in the electronic payment transaction system (TS),
- wherein each token reference (TR) comprises the monetary value (v) of the assigned token (T), a public key (R) corresponding to the private key (r) of the token-individual key pair, and the token-type information of the assigned token (T) as token reference elements and wherein each token reference (TR) being uniquely assigned to a token (T).

2. The secure transaction unit (TU) of claim 1, wherein the token-type information is an information for uniquely identifying a financial service provider unit (SPU) in the electronic payment transaction system (TS), wherein the financial service provider unit (SPU) issued the token (T).

3. The secure transaction unit (TU) of claim 1 or 2, wherein the token-type information is one or more of the following:
- an international security identification number code;
- a German securities identification code;
- a bank code number;
- a bank identifier number.

4. The secure transaction unit (TU) of one of the preceding claims, wherein the control means is further configured to generate one or more token references (TR), especially upon modification commands being processed by the secure transaction unit (TU), the modification commands being preferably one or more of a switch-command, a merge-command and a split-command, wherein the modification commands are only performed for tokens having the same token-type information.

5. The secure transaction unit (TU) of one of the preceding claims, wherein the control means is further configured to perform a swap-command for registering a first token (T) having a first token-type information and a second token (T) having a second token-type information in one single registration request (RR).

6. The secure transaction unit (TU) of claim 5, wherein for performing the swapping command, the control means is configured to:
- perform a first switch-command on the first token (T) having the first token-type information to obtain a third token (T) having the monetary value (v) of the first token and the first token-type information; and
- perform a second switch-command on the second token (T) having the second token-type information to obtain a fourth token (T) having the monetary value (v) of the second token and the second token-type information.

7. The secure transaction unit (TU) of claim 6, wherein the monetary value of the first token equals the monetary value of the second token.

8. The secure transaction unit (TU) of one of the claims 5 or 6, wherein the swap-command is executed to obtain tokens of a prioritized token-type information used for a future payment transaction.

9. The secure transaction unit (TU) according to one of the preceding claims, wherein the secure transaction unit (TU) is a secure element that is operatively connected to an electronic equipment of a participant in the electronic payment system (TS).

10. The secure transaction unit (TU) according to one of the preceding claims 1 to 8, wherein the secure transaction unit (TU) is a secure wallet that is hosted at a service provider unit (SPU).

11. A token reference register (T-Reg) for registering of token (T) of an electronic payment transaction system (TS), the token reference register (T-Reg) comprising:
- one or more storage units (1) for storing token references (TR) for registering tokens (T) in the electronic payment transaction system (TS), wherein each token (T) comprises at least a monetary value (v), a private key (r) of a token-individual key pair, and a token-type information as token elements;
- one or more verifying units (2) for verifying whether the token reference (TR) of a receive registration request (RR) is stored in the token reference register (T-Reg);
- wherein each stored token reference (TR) in the token reference register (T-Reg) comprises the monetary value (v) of the token (T), a public key (R) corresponding to the private key (r) of the token-individual key pair, and the token-type information of the assigned token (T) as token reference elements, and
- wherein each token reference (TR) being uniquely assigned to a token (T).

12. The token reference register (T-Reg) according to claim 11, wherein the storage unit is further configured to store token references (TR) of modified tokens (T) based on a modification command, preferably a switch-command, a merge-command, and/or a split-command, wherein a token reference (TR) of the modification command is stored only in a case all tokens (T) involved in the modification command comprise the same token-type information.

13. The token reference register (T-Reg) according to claim 11 or 12, wherein the verifying unit (2) is configured to reject a registration request (RR) which comprises token references (TR) with different token-type information.

14. An electronic payment transaction system (TS) comprising:
a secure token issuing unit (CB) comprising:
- a minting unit (MU) configured to generate a new token to be issued in the electronic transaction system (TS); and
- a melting unit configured to delete tokens to be deleted from the electronic transaction system (TS);
- a plurality of secure transaction units (TU) according to one of the claims 1 to 10; and
- one or more token register (T-Reg) for registering the tokens (T) of the electronic transaction system (TS) according to one of the claims 11 to 13.

15. A method for registering of token (T) in a token reference register (T-Reg) according to one of the claims 11 to 13.
